# EUROPEAN PATENT APPLICATION

(11) **EP 4 635 636 A1**
(43) Date of publication of application: **22.10.2025**
(21) Application number: 25170815.2
(22) Date of filing: 15.04.2025
(51) Int. Cl.: B05C 5/02, B05C 11/10, H01M 4/04

(54) **APPLICATION SYSTEM**

(30) Priority: 19.04.2024 JP 2024068405
(71) Applicant: AESC Japan Ltd., Yokohama-Shi, Kanagawa 220-0012 (JP); ThreeBond Co., Ltd., Tokyo 192-0398 (JP)
(72) Inventor: MUHAMMAD, Fauzan, Yokohama-shi, 220-0012 (JP); NISHIKAWA, Sachi, Yokohama-shi, 220-0012 (JP); YAMADA, Shinya, Yokohama-shi, 220-0012 (JP); TAKAHASHI, Toshiyuki, Hachioji-shi, 192-0398 (JP); ENDO, Koichiro, Hachioji-shi, 192-0398 (JP); OKAWA, Yuki, Hachioji-shi, 192-0398 (JP); MATSUZAKI, Keita, Hachioji-sh, 192-0398 (JP)
(74) Representative: Haseltine Lake Kempner LLP

(57) **Abstract**

To provide an application system suitable for dispensing a resin containing a hollow filler.

The present invention includes a pressure-feed pump 100 capable of pressure-feeding a viscous material, a leveling part 200 that levels a flow rate of the viscous material delivered by the pressure-feed pump, a dispenser 300 that delivers the viscous material leveled by the leveling part, and includes a structure of a rotary volumetric single-shaft eccentric screw pump, and an applying valve 400 that applies the viscous material delivered from the dispenser in a planar form.

## Description

### TECHNICAL FIELD

The present invention relates to an application system.

### BACKGROUND ART

Systems for applying viscous materials are being researched and developed on a daily basis. The technique related to application systems includes a dispensing unit with a discharge nozzle, a moving device for moving the dispensing unit to an arbitrary position, a storage device for storing the dispensing unit removed from the moving device, and a thermoregulation device for adjusting the temperature of the high viscosity fluid in the dispensing unit. The thermoregulation head of the thermoregulation device is provided in the storage device.

### Citation List

### Patent Literature

Patent Literature 1: JP 2007-216148 A

### SUMMARY OF INVENTION

### Technical Problem

The present inventors have been diligently studying an application system like the one disclosed in Patent Literature 1 which is suitable for dispensing a resin containing a hollow filler.

Accordingly, the present invention aims to provide an application system suitable for dispensing a resin containing a hollow filler.

### Solution to Problem

The application system according to one aspect of the present invention for solving the above problem has a pressure-feed pump, a leveling part, a dispenser, and an applying valve. The pressure-feed pump is configured to be capable of pressure-feeding a viscous material. The leveling part is configured to level the flow rate of the viscous material delivered by the pressure-feed pump. The dispenser delivers the viscous material leveled by the leveling part, and includes a structure of a rotary volumetric single-shaft eccentric screw pump. The applying valve is configured to apply the viscous material delivered from the dispenser in a planar form.

### Effect of the Invention

According to the application system according to the present invention, a resin containing a hollow filler can be suitably applied.

### BRIEF DESCRIPTION OF THE DRAWINGS

FIG. 1 is a perspective view schematically illustrating the application system according to an embodiment of the present invention;
FIG. 2 is a schematic diagram illustrating inner of the leveling part;
FIG. 3 is a diagram illustrating the inner of the applying valve constituting the application system; and
FIG. 4 is an exploded perspective view of a stack of battery pack including the buffer material containing the viscous material and formed by the application system.

### DESCRIPTION OF EMBODIMENTS

Hereinafter, embodiments for carrying out the present invention will be described in detail with reference the drawings. The embodiments shown herein are illustrative to embody the technical ideas of the invention and are not intended to limit the invention. In addition, all other possible embodiments, examples, and operational techniques that may be conceived by those skilled in the art without departing from the gist of the present invention are included within the scope and gist of the present invention, as well as within the scope of the invention as defined in the claims and its equivalents.

Furthermore, the drawings appended hereto may vary from the actual object and may be expressed schematically in terms of scale, dimensional ratio between length and width, shape, etc., as appropriate for ease of illustration and understanding. However, these are merely examples and do not limit the interpretation of the present invention.

Also, in the following description, ordinal words such as "first" and "second" are added to the description, but unless specifically mentioned, they are used for convenience and do not specify any order.

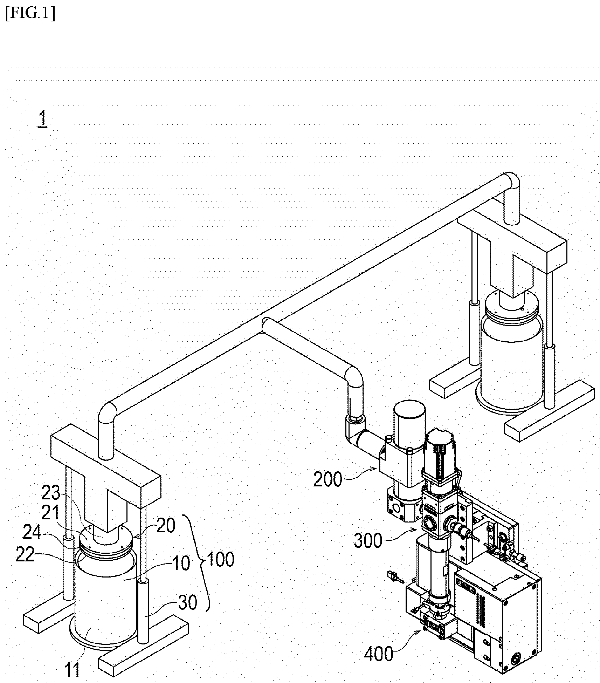

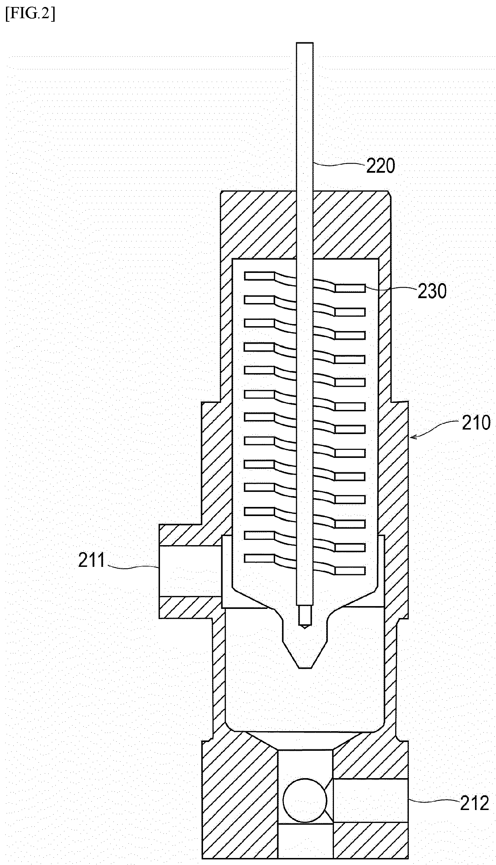

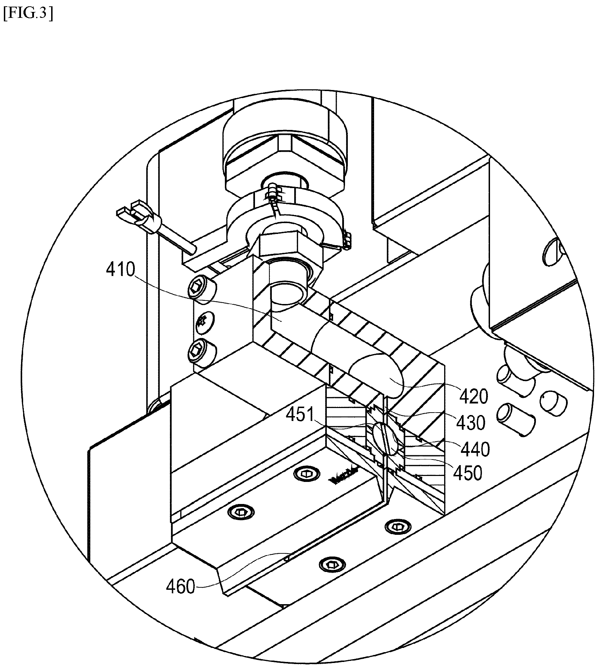

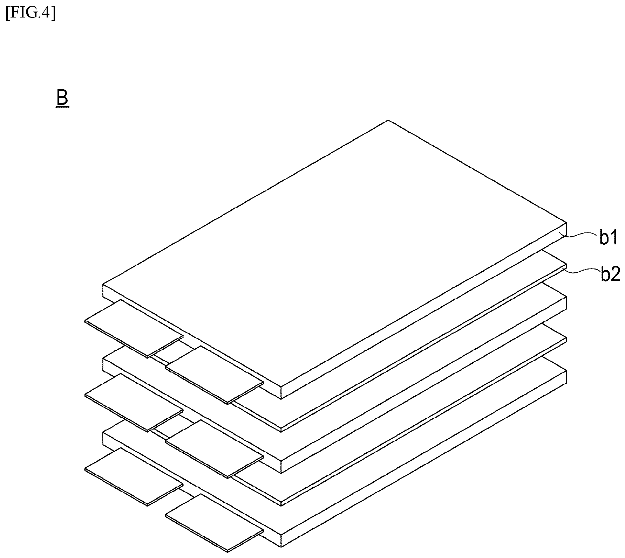

FIG. 1 is a perspective view schematically illustrating an application system 1 according to an embodiment of the present invention. FIG. 2 is a schematic diagram illustrating inner of a leveling part 200 constituting the application system 1. FIG. 3 is a diagram illustrating the inner of the applying valve 400 constituting the application system 1. FIG. 4 is an exploded perspective view of a stack of battery pack B including the buffer material b2 containing the viscous material and formed by the application system 1. The application system 1 can be used to form the buffer material b2 of the battery pack B mounted on an automobile or the like. The buffer material b2 containing the viscous material and formed by the application system 1 can be arranged as a component of the battery pack B between adjacent single batteries b1 (cells) in the stacking direction or between the module case and the single battery b1 (cell) (see FIG. 4).

The application system 1 according to the present embodiment has a pressure-feed pump 100, a leveling part 200, a dispenser 300, and an applying valve 400 as shown in FIG. 1. The viscous material applied by the application system 1 contains a resin and a hollow filler. The viscous material is configured to have a specific gravity of less than 1.00. Hereinafter, it will be described in detail.

The viscous material is a photocurable composition adjusted by combining components (A) to (G) and optional components, with the component (A) described below being an essential component. Here, the component (A) corresponds to a "hollow filler", and the composition of components (B) to (F) and optional components corresponds to a "resin".

Component (A) is a hollow filler, and the hollow filler is a hollow body having a hollow portion and refers to a particle formed by inorganic or organic materials. In particular, the cured product obtained by curing the photocurable composition according to the present invention by including the component (A) has a small reaction force even when compressed with a wide range of compression ratios (especially high compression ratios). Then, by combining the component (A) with resin, not only can a cured product that generates a small reaction force as described above be obtained, but also the photocurable composition can be cured rapidly by photocuring.

Component (A) is formed by glass or synthetic resin. The synthetic resin is not particularly limited, but is preferably a thermoplastic resin, more preferably a polymer (homopolymer) of at least one monomer selected from the group consisting of vinylidene chloride, acrylonitrile, methacrylonitrile, acrylic acid esters (acrylates), and methacrylic acid esters (methacrylates), or a copolymer of two or more monomers selected from the above group. These organic resins may be used singly or in combinations of two or more thereof. With respect to the toughness (strength) of component (A), the synthetic resin constituting component (A) is preferably a polymer (polyacrylonitrile resin) or copolymer containing acrylonitrile as a constituent unit, and more preferably, a copolymer containing acrylonitrile as a constituent unit, and particularly preferably, an acrylonitrile-methacrylonitrile-methyl methacrylate copolymer. In other words, component (A) is preferably composed of an acrylonitrile-methacrylonitrile-methyl methacrylate copolymer.

Component (A) is preferably surface treated to make it easy to blend with the resin. Here, component (A) also includes surface treatment. The type of surface treatment is not particularly limited, but it may be surface treated with silane coupling agents, fatty acids, etc., and inorganic fillers such as calcium carbonate powder may be attached to the surface. Among them, component (A) is more preferably a hollow filler with calcium carbonate powder attached to its surface. These types of surface treatments may be used singly or in combination.

The shape of component (A) is not particularly limited, but is substantially spherical. It is preferable for the component to be spherical, not only to reduce the reaction force during compression of the cured product, but also to facilitate uniform dispersion in the composition. Here, "spherical" means a shape having an aspect ratio in the range of 1.0 to 2.0, preferably in the range of 1.0 to 1.5, and does not necessarily mean true spherical. Note that the aspect ratio in the case of a spherical filler means a long diameter/short diameter ratio. The average particle size of component (A) is not particularly limited, but is preferably in the range of 5 to 300 µm, more preferably in the range of 10 to 200 µm, even more preferably in the range of 50 to 150 µm, particularly preferably in the range of 60 to 130 µm, most preferably in the range of 70 to 100 µm. In addition, the average particle size of component (A) can be determined by a particle size distribution meter using an analytical means such as laser diffraction method. Since the average particle size of component (A) is within the above range, it is possible to obtain a cured product with low reaction force over an even wider range of compression ratio (compression range).

In addition, the true specific gravity of component (A) is not particularly limited, but for example, it is preferably in the range of 0.03 to 0.50 g/cm³, more preferably in the range of 0.05 to 0.40 g/cm³, and particularly preferably in the range of 0.07 to 0.30 g/cm³. The true specific gravity of component (A) can be determined in accordance with JISZ8807:2012. Since the true specific gravity of component (A) is within the above range, it is possible to obtain a cured product with low reaction force over an even wider range of compression ratio (compression range). By adding component (A), the specific gravity in the photocurable composition before curing can be reduced to less than 1.00.

Component (A) may be used as either a synthetic product or a commercially available product. Examples of the commercially available product of the component (A) include EMC-40B, EMC-80B, EMC-120α (manufactured by Japan Fillite Co., Ltd.) and the like.

The content of component (A) is not particularly limited, but with respect to the total mass of 100 parts by mass of the photocurable composition, it is preferably in the range of 3 to 80 parts by mass, more preferably in the range of 5 to 50 parts by mass, particularly preferably in the range of 8 to 30 parts by mass, and most preferably in the range of 10 to 20 parts by mass. In addition, the content of component (A) is not particularly limited, but for a total of 100 parts by mass of the components (B) and (C) described below, for example, it is preferably in the range of 3 to 70 parts by mass, more preferably in the range of 5 to 60 parts by mass, particularly preferably in the range of 10 to 50 parts by mass, and most preferably in the range of 20 to 30 parts by mass. One kind of component (A) above may be used singly, or two or more kinds may be used in combination. When two or more kinds are used in combination, the content of component (A) refers to the total amount.

Component (B) is urethane (meth)acrylate. In particular, a monofunctional urethane (meth)acrylate having one (meth)acryloyl group in the molecule is preferable. By combining the components (A) and (B), the reaction force generated in the cured product can be made smaller, even when the cured product is compressed over a wide range of compression ratios (compression range).

Here, component (B), which is urethane (meth)acrylate, is an ester compound having a urethane bond formed by reaction of an isocyanate group with a hydroxyl group, and a (meth)acryloyl group. In other words, urethane (meth)acrylate is a (meth)acrylic acid ester having a urethane bond. The number of urethane bonds of component (B) may be 1 or more in 1 molecule, and the number of (meth)acryloyl groups is 1 or more in 1 molecule, most preferably 1 in 1 molecule. Note that the (meth)acryloyl group may also be contained in the form of a (meth)acryloyloxy group in the compound. When using a monofunctional urethane (meth)acrylate, the reaction force of the cured product of the photocurable composition does not increase. In addition, from the perspective of reducing the compression set of the obtained cured product, it is preferable that the (meth)acryloyl group contained in component (B) is an acryloyl group. Here, "low compression set" of a material means that the material has a high recovery force when compressed for a long time. Due to such properties, for example, the photocurable composition (and the cured product thereof) according to the present invention can be used as a buffer material. Since the reaction rate of the acryloyl group is higher than that of the methacryloyl group, it is considered that when the (meth)acryloyl group contained in component (B) is an acryloyl group, the compression set is reduced as described above. The monofunctional urethane (meth)acrylate as component (B) is preferably a monofunctional urethane (meth)acrylate oligomer to improve the desired effect. As used herein, the term "oligomer" refers to a polymer in which monomer units (including monomer units other than (meth)acrylate monomers) are repeated 2 to several tens of times, and the weight-average molecular weight is 1000 or more.

Component (B) may include a structure other than a urethane bond and a (meth)acryloyl group, for example, a polyester skeleton, a polycaprolactone skeleton, a polycarbonate skeleton, a polyether skeleton, and the like. These skeletons may be one type in one molecule, or may contain two or more types in combination. In particular, from the perspective of further improving the desired effect, component (B) preferably contains a polyether skeleton. As used herein, the "polyether skeleton" means, for example, a skeleton containing alkylene oxide such as polyethylene oxide, polypropylene oxide, and polybutylene oxide as a repeating unit. From the perspective of further improving the desired effect, component (B) is preferably a monofunctional urethane (meth)acrylate oligomer containing a polyether skeleton (polyether-based monofunctional urethane (meth)acrylate oligomer), and more preferably a monofunctional urethane acrylate oligomer containing a polyether skeleton.

Examples of the method for producing component (B) include, but are not particularly limited to, a method for reacting a polyol compound having a hydroxyl group with a (meth)acrylate having an isocyanate group, and a method for reacting a polyol compound having a hydroxyl group, a polyisocyanate compound, and a (meth)acrylate having a hydroxyl group. These reactions are preferably performed in the presence of a catalyst.

Examples of the polyol compound having a hydroxyl group include, but are not particularly limited to, polyester polyols; polycarbonate polyols; polyether polyols such as polyethylene oxide, polypropylene oxide, polybutylene glycol, and the like. The number of repeating units of the alkylene oxide contained in the polyether polyol is not particularly limited, but is, for example, in the range of 3 to 500, more preferably in the range of 5 to 100, particularly preferably in the range of 10 to 50.

Examples of the (meth)acrylate having an isocyanate group include, but are not particularly limited to, 2-isocyanatoethyl (meth)acrylate, 2-(2-(meth)acryloyloxyethyloxy) ethyl isocyanate, and the like.

Examples of the polyisocyanate compound include, but are not particularly limited to, aromatic polyisocyanates such as 2,4-tolylenediisocyanate, 2,6-tolylenediisocyanate, 1,3-xylylene diisocyanate, 1,4-xylylene diisocyanate, tetramethylxylylene diisocyanate, diphenylmethane diisocyanate, naphthalene-1,5-diisocyanate, triphenylmethanetriisocyanate; alicyclic polyisocyanates such as isophorone diisocyanate, bis(4-isocyanatocyclohexyl)methane, 1,3-bis(isocyanatomethyl)cyclohexane, 1,4-bis(isocyanatomethyl)cyclohexane, norbornane diisocyanate, bicycloheptane trisisocyanate; and linear or branched aliphatic polyisocyanates such as hexamethylenediisocyanate, 1,3,6-hexamethylenetriisocyanate, 1,6,11-undecatriisocyanate, and the like. In particular, the polyisocyanate compound is preferably selected from linear or branched aliphatic polyisocyanates and cycloaliphatic polyisocyanates from the perspective of obtaining a cured product having flexibility. These may be used singly or in combinations thereof.

Examples of the (meth)acrylate having a hydroxyl group include, but are not limited to, 2-hydroxyethyl (meth)acrylate, 2-hydroxypropyl (meth)acrylate, 2-hydroxybutyl (meth)acrylate, 4-hydroxycyclohexyl (meth)acrylate, 1,6-hexanediol mono(meth)acrylate, neopentyl glycol mono(meth)acrylate, (poly)ethylene glycol mono(meth)acrylate, (poly)propylene glycol mono(meth)acrylate, and pentaerythritol tri(meth)acrylate. Among these, 2-hydroxyethyl (meth)acrylate, 2-hydroxypropyl (meth)acrylate, 2-hydroxybutyl (meth)acrylate, 4-hydroxycyclohexyl (meth)acrylate are preferred from the perspective of obtaining a cured product having excellent flexibility. These may be used singly or in combinations thereof.

Furthermore, catalysts used in the synthesis of component (B) can include, for example, lead oleate, antimony trichloride, triphenylaluminum, trioctylaluminum, tetrabutyltin, dibutyltin dilaurate, copper naphthenate, zinc naphthenate, zinc octylate, zinc octenoate, zirconium naphthenate, cobalt naphthenate, tetra-n-butyl-1,3-diacetyloxydistannoxane, triethylamine, 1,4-diaza[2,2,2]bicyclooctane, and N-ethylmorpholine. Among these, dibutyltin dilaurate, zinc naphthenate, zinc octylate, and zinc octenoate are preferably used because they can rapidly cure even with a small accumulated light intensity and yield a low elasticity cured product. The amount of these catalysts added is preferably 0.0001 to 10 parts by mass relative to 100 parts by mass of the total mass of the reactants. In addition, the reaction temperature is typically in the range of 10 to 100°C, particularly preferably in the range of 30 to 90°C.

The weight-average molecular weight of component (B) is not particularly limited. Since the cured product is obtained quickly by photocuring, and the cured product with a low reaction force in a wide range of compression rates (compression range) is obtained, the weight-average molecular weight of component (B) is preferably, for example, 1,000 or more and 300,000 or less, more preferably 3,000 or more and 50,000 or less, and particularly preferably 5,000 or more and 40,000 or less. As used herein, the weight-average molecular weight, unless otherwise specified, adopts a value calculated by a standard polystyrene conversion method using size exclusion chromatography (SEC).

The content of component (B) is not particularly limited, but is preferably in the range of 20 to 90 parts by mass, more preferably in the range of 30 to 85 parts by mass, even more preferably in the range of 40 to 80 parts by mass, particularly preferably in the range of 50 to 75 parts by mass, and most preferably in the range of 60 to 70 parts by mass, for a total of 100 parts by mass of component (B) and component (C) described below. Since the content is within the above range, a cured product can be obtained more quickly by photo-curing, and a photocurable composition can be obtained that can obtain a cured product with low reaction force over a wide compression ratio (compression range). One kind of component (B) may be used singly, or two or more kinds may be used in combination. When two or more kinds are used in combination, the content of component (B) refers to the total amount.

Component (C) is a monofunctional (meth)acrylic monomer. However, component (B) is excluded. Addition of component (C) improves the photocurability. By adding component (C), a cured product with low reaction force can be obtained over a wide range of compression ratios (compression range). Here, a monofunctional (meth)acrylic monomer is a compound containing one (meth)acryloyl group. The (meth)acryloyl group may be included as a form of a (meth)acryloyloxy group in the monomer. Note that a compound having one or more urethane bonds and one (meth)acryloyl group per molecule (provided that it is an ester compound) is included in the above component (B) and is not included in component (C).

In addition, it is preferable that the (meth)acryloyl group contained in component (C) is an acryloyl group for the purpose of improving the photocurability. Due to such a configuration, the reaction rate increases, and the obtained cured product has the advantage of exhibiting a smaller compression set.

The monofunctional (meth)acrylic monomer as component (C) is preferably a monofunctional (meth)acrylate monomer (i.e., an ester compound containing one (meth)acryloyloxy group, a (meth)acrylic acid ester) to improve the desired effect.

Component (C) may contain a structure other than the (meth)acryloyl group. As such a structure, from the perspective of further improving the desired effect, component (C) is preferably containing a polyether skeleton. The definition of "polyether skeleton" is as described in component (B) section above. The number of repeating units of the alkylene oxide constituting the polyether skeleton is not particularly limited, but is, for example, in the range of 2 to 300, preferably in the range of 2 to 100, more preferably in the range of 2 to 30, and particularly preferably in the range of 2 to 10. Also, although the number of carbon atoms constituting the alkylene oxide is not particularly limited, the number of carbon atoms in one repeating unit is preferably in the range of 2 to 10, more preferably in the range of 2 to 5, particularly preferably in the range of 2 to 4, and most preferably 2. In other words, the polyether skeleton contained in component (C) is preferably a polyethylene oxide skeleton.

The molecular weight of component (C) is not particular limited, but from the perspective of improving the curability of the photocurable composition, it is preferably less than 1000, more preferably 500 or less, particular preferably 300 or less. In addition, from the perspective of excellent compatibility with component (B), the molecular weight of the compound of component (C) is preferably greater than 100, and more preferably 130 or more. As used herein, the molecular weight of a compound (low molecular weight compound) can be measured by a known method, such as gas chromatography-mass spectrometry (GC-MS). In addition, if it is not possible to measure by the method, the molecular weight can be determined by identifying the structure of the compound by a method such as NMR and performing a calculation based on the structure.

Component (C) is not particularly limited, and examples include methoxy diethylene glycol mono(meth)acrylate, methoxy triethylene glycol mono(meth)acrylate, methoxy tetraethylene glycol mono(meth)acrylate, methoxy pentaethylene glycol mono(meth)acrylate, methoxy hexaethylene glycol mono(meth)acrylate, methoxy heptaethylene glycol mono(meth)acrylate, methoxy octaethylene glycol mono(meth)acrylate, methoxy nonaethylene glycol mono(meth)acrylate, methoxy decaethylene glycol mono(meth)acrylate, methoxy tripropylene glycol mono(meth)acrylate, methoxy tetrapropylene glycol mono(meth)acrylate, methoxy pentapropylene glycol mono(meth)acrylate, methoxy hexapropylene glycol mono(meth)acrylate, methoxy heptapropylene glycol mono(meth)acrylate, methoxy octapropylene glycol mono(meth)acrylate, methoxy nonapropylene glycol mono(meth)acrylate, and methoxy decapropylene glycol mono(meth)acrylate, methoxy tributylene glycol mono(meth)acrylate, methoxy tetrabutylene glycol mono(meth)acrylate, methoxy pentabutylene glycol mono(meth)acrylate, methoxy hexabutylene glycol mono(meth)acrylate, methoxy heptabutylene glycol mono(meth)acrylate, methoxy octabutylene glycol mono(meth)acrylate, methoxy nonabutylene glycol mono(meth)acrylate, methoxy decabutylene glycol mono(meth)acrylate, ethoxy diethylene glycol mono(meth)acrylate, ethoxy triethylene glycol mono(meth)acrylate, ethoxy tetraethylene glycol mono(meth)acrylate, ethoxy pentaethylene glycol mono(meth)acrylate, ethoxy hexaethylene glycol mono(meth)acrylate, ethoxy heptaethylene glycol mono(meth)acrylate, ethoxy octaethylene glycol mono(meth)acrylate, ethoxy nonaethylene glycol mono(meth)acrylate, ethoxy decaethylene glycol mono(meth)acrylate, ethoxy tripropylene glycol mono(meth)acrylate, ethoxy tetrapropylene glycol mono(meth)acrylate, ethoxy pentapropylene glycol mono(meth)acrylate, ethoxy hexapropylene glycol mono(meth)acrylate, ethoxy heptapropylene glycol mono(meth)acrylate, ethoxy octapropylene glycol mono(meth)acrylate, ethoxy nonapropylene glycol mono(meth)acrylate, ethoxy decapropylene glycol mono(meth)acrylate, ethoxy tributylene glycol mono(meth)acrylate, ethoxy tetrabutylene glycol mono(meth)acrylate, ethoxy pentabutylene glycol mono(meth)acrylate, ethoxy hexabutylene glycol mono(meth)acrylate, ethoxy heptabutylene glycol mono(meth)acrylate, ethoxy octabutylene glycol mono(meth)acrylate, ethoxy nonabutylene glycol mono(meth)acrylate, and ethoxy decabutylene glycol mono(meth)acrylate. Among these, ethoxy diethylene glycol mono(meth)acrylate, ethoxy triethylene glycol mono(meth)acrylate, ethoxy tetraethylene glycol mono(meth)acrylate, ethoxy pentaethylene glycol mono(meth)acrylate, ethoxy hexaethylene glycol mono(meth)acrylate, ethoxy heptaethylene glycol mono(meth)acrylate, ethoxy octaethylene glycol mono(meth)acrylate, ethoxy nonaethylene glycol mono(meth)acrylate, ethoxy decaethylene glycol mono(meth)acrylate, ethoxy tripropylene glycol mono(meth)acrylate, ethoxy tetrapropylene glycol mono(meth)acrylate, ethoxy pentapropylene glycol mono(meth)acrylate, ethoxy hexapropylene glycol mono(meth)acrylate, ethoxy heptapropylene glycol mono(meth)acrylate, ethoxy octapropylene glycol mono(meth)acrylate, ethoxy nonapropylene glycol mono(meth)acrylate, ethoxy decapropylene glycol mono(meth)acrylate, ethoxy tributylene glycol mono(meth)acrylate, ethoxy tetrabutylene glycol mono(meth)acrylate, ethoxy pentabutylene glycol mono(meth)acrylate, ethoxy hexabutylene glycol mono(meth)acrylate, ethoxy heptabutylene glycol mono(meth)acrylate, ethoxy octabutylene glycol mono(meth)acrylate, ethoxy nonabutylene glycol mono(meth)acrylate, ethoxy decabutylene glycol mono(meth)acrylate are preferred. These can be used singly or as a mixture of two or more thereof.

The content of component (C) is not particularly limited, but for a total of 100 parts by mass of the components (B) and (C) above, it is preferably in the range of 10 to 80 parts by mass, more preferably in the range of 20 to 70 parts by mass, even more preferably in the range of 25 to 60 parts by mass, and particularly preferably in the range of 30 to 50 parts by mass. Since the content is within the above range, a cured product can be obtained more quickly by photo-curing, and a photocurable composition can be obtained that can obtain a cured product with low reaction force over a wide compression ratio (compression range). The content (total) of component (B) and component (C) is not particularly limited, but with respect to the total mass of 100 parts by mass of the photocurable composition, it is preferably in the range of 30 to 90 parts by mass, more preferably in the range of 40 to 80 parts by mass, particularly preferably in the range of 50 to 70 parts by mass. One kind of the monofunctional (meth)acrylate monomer as component (C) above may be used singly, or two or more kinds may be used in combination. When two or more kinds are used in combination, the content of component (C) refers to the total amount.

Component (D) is a photoradical polymerization initiator. Component (D) can use compound that generate radical species by irradiation of active energy rays such as visible rays, ultraviolet rays, and electron beam. Such photoradical polymerization initiators include acetophenone-based photoradical polymerization initiators, benzoin-based photoradical polymerization initiators, benzophenone-based photoradical polymerization initiators, thioxanthone-based photoradical polymerization initiators, acylphosphine oxide-based photoradical polymerization initiators, titanocene-based photoradical polymerization initiators, and the like. Among these, since a photocurable composition with a fast curing speed is obtained even if the integrated light dose is small, component (D) is preferably an acetophenone-based photoradical polymerization initiator and/or an acylphosphine oxide-based photoradical polymerization initiator, and is more preferably an acetophenone-based photoradical polymerization initiator. These can be used singly or as a mixture of two or more thereof.

Acetophenone-based photoradical polymerization initiators include, but are not limited to, diethoxyacetophenone, 2-hydroxy-2-methyl-1-phenyl-propan-1-one, benzyl dimethyl ketal, 4-(2-hydroxyethoxy) phenyl-(2-hydroxy-2-propyl) ketone, 1-hydroxy-cyclohexyl-phenyl-ketone, 2-methyl-2-morpholino(4-thiomethylphenyl) propan-1-one, 2-benzyl-2-dimethylamino-1- (4-morpholinophenyl) butanone, 2-hydroxy-2-methyl-1-[4-(1-methylvinyl) phenyl] propanone oligomer, and the like. Commercially available product of acetophenone-based photoradical polymerization initiators above include Omnirad ((R), hereinafter the same)184, Omnirad1173, Omnirad2959, Omnirad127 (manufactured by IGM Resins B.V.), and ESACURE(R) KIP-150 (manufactured by IGM Resins B.V.).

Examples of acylphosphine oxide-based photoradical polymerization initiators include, but are not limited to, bis(2,4,6-trimethylbenzoyl)-phenyl-phosphine oxide, 2,4,6-trimethylbenzoyl-diphenyl-phosphine oxide, and the like. Commercially available product of acylphosphine oxide-based photoradical polymerization initiators include OmniradTPO, Omnirad819, and Omnirad819DW (manufactured by IGM Resins B.V.).

The content of component (D) is not particularly limited, but for a total of 100 parts by mass of the components (B) and (C) above, it is preferably in the range of 0.1 to 15 parts by mass, more preferably in the range of 0.3 to 7.0 parts by mass, particularly preferably in the range of 0.5 to 5.0 parts by mass, and most preferably in the range of 1.0 to 3.0 parts by mass. Since the content is within the above range, it is possible to obtain a photocurable composition that obtains a cured product with low reaction force over an even wider range of compression ratio (compression range). One kind of the photoradical polymerization initiator as the component (D) may be used singly, or two or more kinds may be used in combination. When two or more kinds are used in combination, the content of component (D) refers to the total amount.

Component (E) is a plasticizer that does not have a reactive group such as a (meth)acryloyl group. In particular, by using a plasticizer that does not have a (meth)acryloyl group, an effect is obtained in which the reaction force generated in the obtained cured product becomes small over a wide range of compression rates (compression range). By combining component (E) with component (A), a photocurable composition can be obtained that results in a cured product with low reaction force over a wide range of compression ratio (compression range).

As the plasticizer in component (E), from the perspective of improving the desired effect, it is preferably containing a polyether skeleton. The definition of "polyether skeleton" is as described in component (B) section above. Although the number of carbon atoms constituting the alkylene oxide is not particularly limited, the number of carbon atoms in one repeating unit is preferably in the range of 2 to 10, more preferably in the range of 2 to 5, particularly preferably in the range of 2 to 4, and most preferably 3. In other words, the polyether skeleton contained in component (E) is preferably a polypropylene oxide skeleton. The number of repeating units of the alkylene oxide constituting the polyether skeleton is not particularly limited, but is, for example, in the range of 3 to 300, more preferably in the range of 5 to 100, particularly preferably in the range of 10 to 60, most preferably in the range of 20 to 50.

The number-average molecular weight of component (E) is not particularly limited, but is, for example, in the range of 200 to 30000, preferably in the range of 350 to 10000 particularly preferably 500 to 5000, and most preferably 1000 to 3000. As used herein, the number-average molecular weight, unless otherwise specified, adopts a value calculated by a standard polystyrene conversion method using size exclusion chromatography (SEC). Since the content is within the above range, a cured product can be obtained more quickly by photo-curing, and a photocurable composition can be obtained that can obtain a cured product with low reaction force over a wide compression ratio (compression range).

Examples of plasticizers that can be used as component (E) include polyols and condensates thereof, such as glycerin, diglycerin, triglycerin, ethylene glycol, propylene glycol, polyethylene glycol, and the like.

The plasticizer as component (E) may be either synthetic product or commercially available product. Commercially available product of component (E) is not particularly limited, but include, for example, PEG#300, PEG#400, PEG#600, PEG#1000, PEG#1500, PEG#15400, PEG#2000, PEG#4000, PEG#6000, PEG#1100, PEG#2000, UNIOL(R) D-700, D-1000, D1200, D2000, D4000, PB-500, PB-700, PB-1000, PB-2000 (manufactured by NOF Corporation), and the like.

The content of component (E) is not particularly limited, but for a total of 100 parts by mass of the components (B) and (C) above, it is preferably in the range of 20 to 200 parts by mass, more preferably in the range of 25 to 150 parts by mass, particularly preferably in the range of 30 to 100 parts by mass, and most preferably in the range of 35 to 70 parts by mass. Since the content is within the above range, a cured product can be obtained more quickly by photo-curing, and a photocurable composition can be obtained that can obtain a cured product with low reaction force over a wide compression ratio (compression range). One kind of the plasticizer as component (E) may be used singly, or two or more kinds may be used in combination. When two or more kinds are used in combination, the content of component (E) refers to the total amount.

Component (F) is a multifunctional (meth)acrylic monomer having two or more (meth)acryloyl groups in one molecule. However, component (B) is excluded. By combining component (F) with component (A), a cured product can be obtained quickly by photo-curing, and a photocurable composition can be obtained that can obtain a cured product with low reaction force over a wide compression ratio (compression range). Here, a multifunctional (meth)acrylic monomer is a compound containing two or more (meth)acryloyl groups. The (meth)acryloyl group may be included as a form of a (meth)acryloyloxy group in the monomer.

The number of (meth)acryloyl groups included in the multifunctional (meth)acrylic monomer as component (F) is not particularly limited as long as it is two or more, but since a photocurable composition having a fast curing speed is obtained even with a small integrated light dose, it is preferably three or more (three or more functions), more preferably four or more (four or more functions), and particularly preferably five or more (five or more functions). On the other hand, the upper limit of the number of (meth)acryloyl groups is not particularly limited, but is, for example, 8 or less (8 functions or less). It is also preferable that the (meth)acryloyl group contained in component (F) is an acryloyl group for the purpose of improving the photocurablility and reducing the compression set of the obtained cured product.

The multifunctional (meth)acrylic monomer as component (F) is preferably a multifunctional (meth)acrylate monomer (i.e., an ester compound containing two or more (meth)acryloyloxy groups, a (meth)acrylic acid ester) to improve the desired effect. Also, the preferred number of (meth)acryloyl groups included in the multifunctional (meth)acrylate monomer is the same as above.

The molecular weight of component (F) is not particular limited, but from the perspective of improving the curability of the photocurable composition, it is preferably less than 1000, more preferably 600 or less. In addition, from the perspective of excellent compatibility with component (A), the molecular weight of the compound of component (F) is preferably greater than 200, and more preferably 300 or more.

On the other hand, from the perspective of photocurability, component (F) is preferably a multifunctional (meth)acrylic monomer that does not have a hydroxyl group, more preferably a multifunctional (meth)acrylate monomer that does not have a hydroxyl group, and particularly preferably a multifunctional acrylate monomer that does not have a hydroxyl group.

Component (F) is not particularly limited, but includes, for example, tetrafunctional (meth)acrylate monomers such as ditrimethylolpropane tetra(meth)acrylate and pentaerythritol tetra(meth)acrylate; pentafunctional (meth)acrylate monomers such as alkyl-modified dipentaerythritol penta(meth)acrylate; and hexafunctional (meth)acrylate monomers such as dipentaerythritol hexa(meth)acrylate. Among these, alkyl-modified dipentaerythritol penta(meth)acrylate and dipentaerythritol hexa(meth)acrylate are preferred. These monomers can be used singly or as a mixture of two or more thereof.

The content of component (F) is not particularly limited, but for a total of 100 parts by mass of the components (B) and (C) above, it is preferably in the range of 0.1 to 15 parts by mass, more preferably in the range of 0.2 to 5 parts by mass, and particularly preferably in the range of 0.3 to 3 parts by mass. Since the content is within the above range, a cured product can be obtained more quickly by photo-curing, and a photocurable composition can be obtained that can obtain a cured product with low reaction force over a wide compression ratio (compression range). One kind of the multifunctional (meth)acrylate monomer as component (F) above may be used singly, or two or more kinds may be used in combination. When two or more kinds are used in combination, the content of component (F) refers to the total amount.

Component (G) is an inorganic filler. However, component (A) is excluded. Component (G) include, but are not particularly limited to, for example, glass powder, fumed silica powder, alumina powder, talc powder, mica powder, ceramic powder, silicone rubber powder, calcium carbonate powder, aluminum hydroxide powder, aluminum nitride powder, carbon powder, kaolin clay powder, dried clay mineral powder, dried diatomaceous earth powder, and the like. Among these, fumed silica powder and talc powder are preferred for the purpose of obtaining a photocurable composition that can obtain a cured product with low reaction force in a wide range of compression ratio (compression range). These can be used singly or as a mixture of two or more thereof. In addition, those used for the surface treatment of component (A) are excluded.

The above fumed silica powder is preferably hydrophobized with at least one surface treatment agent selected from the group consisting of organochlorosilanes, dimethylsilicone, and hexamethyldisilazane, for the purpose of obtaining a photocurable composition that can obtain a cured product with low reaction force in a wide range of compression ratio (compression range). Specific examples of silica include, for example, Aerodil(R) R974, R972, R972V, R972CF, R805, R812, R812S, R816, R8200, RY200, RX200, RY200S, R202 (manufactured by NIPPON AEROSIL CO., LTD.), and the like. These can be used singly or as a mixture of two or more thereof.

The content of component (G) is not particularly limited, but for a total of 100 parts by mass of the components (B) and (C) above, it is preferably in the range of 0.01 to 100 parts by mass, more preferably in the range of 0.1 to 50 parts by mass, particularly preferably in the range of 0.5 to 20 parts by mass, and particularly preferably in the range of 3 to 10 parts by mass. Since the content is within the above range, it is possible to obtain a photocurable composition that obtains a cured product with low reaction force over an even wider range of compression ratio (compression range). One kind of the inorganic filler as component (G) above may be used singly, or two or more kinds may be used in combination. When two or more kinds are used in combination, the content of component (G) refers to the total amount.

### <Optional component>

Without departing from the object of the present invention, the composition may further include additives such as thermoplastic resin (excluding component (A)), elastomer, tackifier, surfactant, organic peroxide, polythiol, silane coupling agent, stabilizer, antioxidant, light stabilizer, rust inhibitor, pigment, dye, and flame retardant.

The specific gravity of the photocurable composition containing the components (A) to (G) is preferably less than 1.00. As a result, the reaction force at 10% compression of the cured product is 1 to 300 kPa, and the reaction force at 50% compression of the cured product is 1 to 500 kPa, which has the performance as a buffer material.

### <Curing method>

The photocurable composition according to the present invention can be cured by irradiating with active energy rays such as ultraviolet rays or visible light. As used herein, active energy rays refer to light in a broad sense, including various active energy rays such as radiation such as α-rays and β-rays, electromagnetic waves such as γ-rays and X-rays, electron beam (EB), ultraviolet rays with a wavelength of about 100 to 400 nm, and visible rays with a wavelength of about 400 to 800 nm.

The light source used in curing the photocurable composition is not particularly limited. Examples include low-pressure mercury lamps, medium-pressure mercury lamps, high-pressure mercury lamps, ultra-high-pressure mercury lamps, black light lamps, microwave-excited mercury lamps, metal halide lamps, sodium lamps, halogen lamps, xenon lamps, LEDs, fluorescent lamps, sunlight, electron beam irradiation devices, and the like. Specific examples of irradiation devices include, but are not limited to, belt conveyor type irradiators, spot irradiators, and the like. In addition, although the lower limit of the integrated light dose is not particularly limited, it is preferably 0.5 kJ/m² or more, and more preferably 1.0 kJ/m² or more. In this way, the photocurable composition according to the present invention can be sufficiently cured even with a small integrated light dose, and the properties of the obtained cured product are also excellent. In addition, the upper limit of the integrated light dose is not particularly limited, but preferably 50kJ/m² or less, and more preferably 30 kJ/m² or less.

### (Pressure-feed pump)

The pressure-feed pump 100 is configured to be capable of pressure-feeding a viscous material, and includes a tank 10, a piston 20, and an air cylinder 30.

The tank 10 has a storage space 11 for storing a viscous material as shown in FIG. 1. The tank 10 is formed into a cylindrical member made of plastic materials such as polyethylene, polypropylene, ethylene-vinyl acetate copolymer, polyethylene terephthalate, polyamide, or metal, and is open at the top to accommodate a viscous material. Provided that, as long as the tank 10 is capable of storing a viscous material, the specific shape is not limited to a cylinder, and the shape may be composed of a polygonal column such as a square column in addition to the above. Also, as long as the tank 10 can be stably installed on the ground, the shape may not be cylindrical or polygonal.

The piston 20 is slidably inserted into the interior of the tank 10. The piston 20 includes a main body part 21, a pressing surface 22, a suction passage 23, and a peripheral part 24, as shown in FIG. 1.

The main body part 21 is formed in a substantially cylindrical shape, with a suction passage 23 formed about at the center and a pressing surface 22 formed on the lower side. The main body part 21 can be configured, for example, by a metal plate or the like.

The pressing surface 22 is provided at the lower side of the main body part 21 and is configured as a member to press the viscous material. The pressing surface 22 is formed in a substantially disc shape in the present embodiment. However, the specific shape is not limited to a disc as long as it can press the viscous material.

The suction passage 23 is configured as a member through which the viscous material in the tank 10 flows when pressed by the pressing surface 22. The suction passage 23 is a substantially cylindrical cavity provided with the interior of the main body part 21. However, its specific shape does not need to be cylindrical as long as it allows the flow of the viscous material.

The peripheral part 24 is provided on the outer periphery of the main body part 21. The peripheral part 24 can be provided with a groove for attaching a sealing member such as rubber. This prevents the viscous material from leaking out around the periphery of the piston 20 when the viscous material is pressed by the piston 20.

The air cylinder 30 is provided for pneumatically moving the piston 20 up and down between the opening and the bottom of the tank 10. The air cylinder 30 allows the viscous material in the tank 10 to flow into the interior of the piston 20. The viscous material flows to the leveling part 200 through the pipe P by the pressure-feed pump 100. The viscous material flows through the pipe P at a pressure of 1.0 to 2.0 MPa.

### (Leveling part)

The leveling part 200 is configured to level the flow rate of the viscous material delivered by the pressure-feed pump 100, and includes an accommodating part 210, a shaft 220, and a pressing part 230, as shown in FIG. 2. The accommodating part 210 is configured to form a semi-closed space connectable to the flow path, with an inlet 211 connected to the pipe P and an outlet 212 connected to the dispenser 300 through a pipe not shown. The accommodating part 210 is configured to rotatably accommodate the shaft 220 and the pressing part 230. The accommodating part 210 longitudinally configures the accommodating space in an installed state. The shaft 220 is installed to extend vertically in the internal space of the accommodating part 210 and is integrally rotatable with the pressing part 230.

The pressing part 230 is configured to push the piston with the force of a spring, so that the flow rate of the viscous material flowing in from the inlet 211 remains sufficient and to back up the flow rate of the viscous material flowing out from the outlet 212. In this embodiment, the pressing part 230 is configured to include a coil spring. The leveling part 200 is known by the trade name "wave absorber".

### (Dispenser)

The dispenser 300 is provided downstream from the leveling part 200 and is configured to deliver the viscous material leveled by the leveling part 200. The dispenser 300 includes a structure of a rotary volumetric single-shaft eccentric screw pump, such as a mohno-dispenser (R), and constitutes the main part in a combination of a rotor corresponding to a male screw and a stator corresponding to a female screw. When the rotor is inserted into the stator of the dispenser, a gap called a cavity is formed between the stator and the rotor, and when the rotor rotates in the stator, the cavity moves to the dispensing side while generating suction force.

The fluid drawn into the cavity in response to the rotation of the rotor is continuously transferred to the dispensing side within each sealed space and then dispensed to the outside. Since the cross-sectional area of the cavity remains constant regardless of the position of the rotor, the amount of fluid dispensed is constant. This enables a quantitative transfer without pulsation of the dispensed amount per unit time in proportion to the speed of the rotor. In addition, by inverting the rotation direction of the rotor, the fluid flow can be inverted to switch between dispensing and suction.

### (Applying valve)

The applying valve 400 is configured to apply the viscous material delivered from the dispenser 300 in a planar form, and includes a flow path 410, a buffer chamber 420, a passage 430, a buffer chamber 440, an open/close valve 450, and a slit nozzle 460, as shown in FIG. 3.

The flow path 410 is formed such that the flow path has a sufficiently large cross-sectional dimension orthogonal to the passage 430 described below. The dimensions of the cross-sectional area of the flow path 410 are not particularly limited, but are, for example, on the order of several tens of millimeters.

A buffer chamber 420 is provided at the end of the flow path 410, with its width longer than the passage 430 and its depth longer than the passage 430.

The passage 430 is configured to extend along a height direction to intersect an extending direction of the flow path 410. The passage 430 is configured to cause a sufficiently large fluid resistance to the flow rate of the viscous material by configuring the dimensions in the width direction and the depth direction smaller than the flow path 410 and the buffer chamber 420 as described above.

The buffer chamber 440 is provided downstream from the passage 430 and configures the width and depth dimensions larger than the passage 430. The interior of the buffer chamber 440 is configured to accommodate the open/close valve 450.

The open/close valve 450 is rotatably configured by a motor or the like in an internal space of the buffer chamber 440. The open/close valve 450 is provided with a linear passage 451, and in response to the rotation of the open/close valve 450, the passage 430 and the slit nozzle 460 are alternately communicated or not communicated. This configuration allows for switching between allowing or blocking the flow of the viscous material from the dispenser 300 to the slit nozzle 460.

The slit nozzle 460 dispenses to stretch the viscous material flowing from the flow path 410 in a width direction.

The viscous material from the pressure-feed pump 100 flows to the applying valve 400 in a state where the flow rate is leveled at the leveling part 200, resulting in almost no pulsation at the dispenser 300. **In** the applying valve 400, the viscous material is filled into the buffer chamber 420, and then flows through the passage 430 into the buffer chamber 440. After the pressure is uniformized, the viscous material is uniformly dispensed from the slit nozzle 460 across the entire nozzle.

As described above, in the present embodiment, the application system 1 has the pressure-feed pump 100 capable of pressure-feeding the viscous material, the leveling part 200, the dispenser 300, and the applying valve 400. The leveling part 200 is configured to level the flow rate of the viscous material delivered by the pressure-feed pump 100. The dispenser 300 delivers the viscous material leveled by the leveling part 200, and includes a structure of a rotary volumetric single-shaft eccentric screw pump. The applying valve 400 is configured to apply the viscous material delivered from the dispenser 300 in a planar form. By configuring in this way, the (buffer) function of the resin used as the buffer material b2 in the automobile battery pack B can be maintained without being impaired.

In addition, the viscous material is configured to include the resin and the hollow filler. By dispensing such a viscous material through the application system 1, the (buffer) function of the resin used as the buffer material b2 in the battery pack B can be maintained without being impaired.

In addition, the pipe P through which the viscous material can flow is provided from the pressure-feed pump 100 to the leveling part 200, and the configuration is such that the viscous material flows through the pipe P at a pressure of 1.0 to 2.0 MPa. By configuring in this way, it is possible to suppress the increase in the specific gravity of the resin described above, which prevents or reduces the impairment of the (buffer) function as the buffer material b2.

Also, the specific gravity of the viscous material is configured to be less than 1.00. This prevents or reduces the loss of the (buffer) function of the resin as the buffer material b2.

It should be noted that the present invention is not limited to the above-described embodiments, and various modifications can be made within the scope of the claims. In the above, two pressure-feed pumps 100 are provided in the application system, but the number of pressure-feed pumps may be other than two.

### REFERENCE SIGNS LIST

1 application system
100 pressure-feed pump200 leveling part
300 dispenser
400 applying valve
B battery pack
b2 buffer material.

## Claims

1. An application system comprising:
a pressure-feed pump capable of pressure-feeding a viscous material;
a leveling part that levels a flow rate of the viscous material delivered by the pressure-feed pump;
a dispenser that delivers the viscous material leveled by the leveling part, and includes a structure of a rotary volumetric single-shaft eccentric screw pump; and
an applying valve that applies the viscous material delivered from the dispenser in a planar form.

2. The application system according to claim 1, wherein the viscous material comprises a resin and a hollow filler.

3. The application system according to claim 1 or 2, comprising a pipe that allows the viscous material to flow from the pressure feed pump to the leveling part,
wherein the viscous material flows through the pipe at a pressure of 1.0 to 2.0 MPa.

4. The application system according to claim 1, wherein the viscous material has a specific gravity of less than 1.00.

5. A buffer material that is arranged between adjacent cells constituting a battery pack, the buffer material comprising a viscous material applied by the application system according to claim 1.

6. A battery pack in which a buffer material comprising a viscous material and formed by the application system according to claim 1 is arranged between adjacent cells.
